# EUROPEAN PATENT SPECIFICATION

(11) **EP 2 552 714 B1**
(45) Date of publication and mention of the grant of the patent: **04.01.2017**
(21) Application number: 11725496.1
(22) Date of filing: 29.03.2011
(51) Int. Cl.: B60C 11/04, B60C 11/13

(54) **TYRE FOR HEAVY LOAD VEHICLE WHEELS**
REIFEN FÜR SCHWERLASTFAHRZEUGRÄDER
PNEU POUR DES ROUES DE VÉHICULE DE TRANSPORT DE CHARGE LOURDE

(30) Priority: 30.06.2010 US 360398 P; 31.03.2010 IT RM20100150
(43) Date of publication of application: 06.02.2013
(73) Proprietor: Pirelli Tyre S.p.A., 20126 Milano (IT)
(72) Inventor: MINOLI, Claudio, I-20126 Milano (IT); MONTANARO, Fabio, I-20126 Milano (IT); ASCANELLI, Alessandro, I-20126 Milano (IT)
(74) Representative: Fiammenghi, Eva
(86) International application number: PCT/IB2011/000667
(87) International publication number: WO 2011/121421

(56) References cited:
- WO-A1-2009/157268
- DE-A1- 2 711 066
- JP-A- 2006 143 019
- US-A- 6 105 643
- US-A1- 2006 102 267

## Description

The present invention relates to a tyre for vehicle wheels, particularly for heavy load vehicle wheels.

Tyres intended for use with heavy load vehicles are typically required to have excellent traction, directionality and controllability features.

A further feature typically required of this kind of tyres is a reduced and/or as far as possible uniform wear, so as to increase the tyre performances as to mileage and reduce noise and vibrations while running.

Moreover, some kinds of tyres intended for use with heavy load vehicles are in particular required to have traction and controllability features on snow-covered or slippery road surfaces.

The above-mentioned features are partially conflicting with one another. Particularly, it is practically very difficult to ensure excellent tyre performances as to traction, road holding both on dry and wet grounds, controllability and directionality without in some way affecting the tyre performances as to mileage and noise/vibrations.

US 4258769 describes a radial tyre having a tread pattern designed to meet the following conditions:
1) W1=(5-9%)TW
2) W2=(0,5-2,5%)TW
3) 60%BW>A and A>20%TW
4) B2=(1,0-2,0)B1

Where W1 is the width of a wide circumferential groove, TW is the width of the tread band, W2 is the width of a narrow circumferential groove, BW is the effective belt width, A is the width of the tread band central portion, B1 is the tread band side portion facing the tread band central portion and B2 is the tread band side portion facing the two shoulder portions.

JP6143934 describes a tyre intended particularly to be mounted on trucks, busses etc. provided with a zigzag circumferential groove near both edges of the tread band. The whole circumference of the shoulder portion has voids arranged approximately at equal intervals. The interval PV between the centres of adjacent voids is larger than the length PS of the zigzag pitch of the circumferential groove.

Another tyre for heavy load vehicles, corresponding with the features of claim 1 and possessing improved wear resistance while maintaining durability, is disclosed by document WO2009/157268.

The Applicant has observed that in order to increase the traction of a tread intended for this kind of vehicles as compared to the treads of the prior art it is convenient to increase the number of blocks, particularly in the central portion of the tread band.

The Applicant has also observed that a large number of blocks, particularly in the central portion of the tread band, improves traction especially on wet, snow-covered and/or dirt grounds, but can give rise to a yielding and low controllability sensations, particularly in tyres mounted on steering axles.

Moreover, an excessive number of blocks, particularly in the central portion of the tread band, may increase the tyre noise. In fact, a major cause of noise is the continuous sequence of impacts of the block edges on the road surface.

The Applicant has further noted that in the tyres of the prior art, in order to increase the block strength and not to cause the above-mentioned yielding and low controllability sensations, it is generally preferred to circumferentially tie the blocks with each other, by reducing the depth of the grooves separating the same.

This choice is generally due to the need of improving above all the handling, particularly in the central portion. However, the Applicant has noted that tying with each other the blocks in the circumferential portion on the one hand provides greater strength and thus a better handling, on the other hand favours the triggering of uneven wear phenomena at the block transverse edges and noticeably reduces the tyre traction, particularly in the second part of the service life.

The Applicant has found that the reciprocally contrasting problems discussed above are solved by a tread pattern comprising, in the most central portion thereof, at least four rows of blocks, of which those close to the equatorial plane have reduced dimensions, preferably both axially and circumferentially. The blocks of the central rows are defined by deep grooves, so as to be free to move, but are arranged so as to work, in the footprint area, as a single block.

In the shoulder region, instead, the tread has blocks with relevant axial dimension, preferably circumferentially tied with each other.

More particularly, according to a first aspect thereof, the present invention relates to a tyre having a tread comprising a central portion L1 astride an equatorial plane X-X and two shoulder portions L2, L3.

The present invention, in the aforementioned aspect, may have at least one of the preferred features hereinafter described.

Preferably, the shoulder portions L2; L3 may each have at least one row of shoulder blocks, comprising a plurality of shoulder blocks.

Suitably, the central portion L1 may have at least one first and one second central rows of central blocks, comprising a plurality of central blocks and at least one first and one second lateral rows of lateral blocks comprising a plurality of lateral blocks.

Preferably, the central blocks of the first and second central rows have an average width l₁ smaller than 15% of the total width L of the tread band.

Suitably, the central blocks of the first and second central rows are longitudinally separated respectively by transverse grooves.

Advantageously, the central blocks of the first central row are axially separated from the central blocks of the second central row by a first circumferential groove with a zig-zagging course comprising a plurality of first inclined segments alternated with a plurality of second segments counter-inclined with respect to the first inclined segments.

Preferably, the first inclined segments and the second counter-inclined segments may define on each central block of the first and second central rows a first inclined side and a second side, counter-inclined with respect to the first side. The first inclined side and the second counter-inclined side are adapted to form a convex portion of the central block.

Advantageously, each central block of the first central row is arranged with respect to the central blocks of the second central row so that a first side thereof faces a second side of a first central block of the second central row, and that a second side thereof faces a first side of a second central block of the second central row, distinct from the first block of the second central row.

For the purposes of the present invention, the expression "counter-inclined" referred to a groove or a segment thereof can be interpreted as the condition in which, given a predetermined inclination of a reference groove, the counter-inclination is represented by an opposite inclination.

With reference to the previous definition, by "opposite inclination" it is meant the condition in which, given a straight line or an inclined segment of a straight line forming an angle of between 0° and 90°, its opposite inclination defines a straight line or a counter-inclined segment of a straight line forming an angle of between 90° and 180°, or vice-versa.

With reference to the inclination of the extension direction of the grooves with respect to the equatorial plane of the tyre, such inclination is to be intended, for each point of the groove and/or of the straight line, as referred to the angle defined by a clockwise rotation carried out starting from a plane parallel to the equatorial plane up to the direction tangent the straight line passing through such point.

If not differently stated, by "extension" of a groove it is meant the length of the groove measured along its course.

For the purposes of the present invention, the width of the circumferential and/or transverse grooves may be detected taking the width of the radially outer edges of the grooves themselves as a reference.

For the purposes of the present invention, the following definitions are further applied:
By "equatorial plane" of the tyre it is meant a plane perpendicular to the rotation axis of the tyre and dividing the tyre into two symmetrically equal portions.

By "circumferential" direction it is meant a direction generically directed according to the rotation direction of the tyre, or in any case only slightly inclined with respect to the rotation direction of the tyre.

By "axial direction" or "axially" it is meant a direction parallel to, or in any case only slightly inclined with respect to the rotation axis of the tyre.

By "tread band width" it is meant the distance between the axially outer edges of the radially outer profile of the tread band in a cross section of the tyre.

By "average width" of a block it is meant the arithmetical mean of the distances, measured in the axial direction, of the possible opposite segments forming the axially outer sides of the block.

By "average height" of a block it is meant the arithmetical mean of the distances, measured in the circumferential direction, of the possible segments forming the sides arranged transversally of a block.

By "average width" of a groove it is meant the arithmetical mean of the widths measured at different depths and along the whole depth of the groove.

By "pitch" of the tyre it is meant the group of grooves and rubber portions arranged so as to form a pattern portion which is repeated substantially the same and without interruption along the circumferential development of the tread band. The pitches may have different circumferential lengths along the circumferential development of the tread band.

Preferably, each central block of the first central row may be arranged with respect to the central blocks of the second central row so that a first side thereof faces a second side of a first central block of the second central row, and that a second side thereof faces a first side of a second central block of the second central row, circumferentially adjacent to the first block of the second central row. Advantageously, the first inclined segments of the first circumferential groove may extend according to a direction adapted to form an angle α1 with the equatorial plane X-X, with α1 between 0° and 90°. Preferably, α1 is less than 45°. Preferably, α1 is greater than 5°, for example equal to about 15°.

Advantageously, the second counter-inclined segments of the first circumferential groove my extend according to an extension direction adapted to form an angle α2 with the equatorial plane X-X, with α2 between 90° and 180°. Preferably, α2 is greater than 130°. Preferably, α2 is less than 175°, for example equal to about 165°.

The first circumferential groove has a width smaller than 3 mm.

The choice of such a width for the first circumferential groove together with the inclination of the first and second segments thereof favours the interaction of the central blocks in the footprint area.

In the footprint area, the central blocks of the central rows get closer meshing with each another, and act in this portion as a single block with a greater strength and adapted to promote the tyre handling.

Preferably, the first circumferential groove may have a depth greater than 10 mm.

Suitably, the central blocks of the first and second rows of central blocks may be separated in the circumferential direction by first transverse grooves.

The first circumferential grooves may extend along a direction adapted to form an angle α3 with the equatorial plane X-X.

Preferably, the angle α3 is greater than 50°, preferably greater than 70°, in any case less than 90°, for example equal to about 80°.

Advantageously, the central blocks of the first and second central rows have a ratio between a block average width l₁, measured in the axial direction, and a block average height H1, measured in the circumferential direction, in the range between 0,6 and 0,8, for example equal to 0,7.

As mentioned above, the central blocks may have an average width l₁, measured in the axial direction, smaller than 15% of the total width L of the tread band. Preferably, the average width l₁ is smaller than 14% of the width L. Preferably, the average width l₁ is greater than 7% of the width L.

In order to provide the blocks in a particularly stressed region of the tread band with a determined stiffness, the blocks of the central rows may substantially have the shape of polygons and preferably of substantially convex polygons.

For the purposes of the present invention, by substantially convex polygon it is meant a polygon in which an extension of any one of its sides substantially never crosses the surface of the polygon itself.

For practical purposes, the above-mentioned blocks of the central rows may also have small recesses (e.g. at most of 1-2 mm, or, as a percentage, at most of less than 5% of the larger dimension of the block itself), in any case maintaining an adequate stiffness for the purposes of the invention.

Preferably, the central blocks of the central rows may have substantially the same shape and dimension.

Suitably, the tread may comprise two second circumferential grooves for separating the central blocks of the first and second central rows from the lateral blocks of the first and second lateral rows.

For increasing the handling, the second circumferential grooves may have a substantially undulating course.

Suitably, the second circumferential grooves may have a width smaller than 10 mm.

Preferably, the second circumferential grooves may have a depth greater than 12 mm.

Advantageously, the lateral blocks of the first and/or of the second lateral rows may be separated by second transverse grooves.

In order to provide the lateral blocks with strength and, at the same time, mobility in the circumferential direction while entering or leaving the footprint area, for reducing the possible triggering of "heel and toe" wear phenomena, the second transverse grooves may have a width that decreases as function of the depth.

Suitably, the second transverse grooves may have a maximum depth greater than 12 mm.

Advantageously, the second transverse grooves may have a "stepwise" course of the width as a function of the depth.

In detail, the second grooves may have a width having a discontinuity, preferably an abrupt narrowing moving in the radial direction towards the rotation axis of the tyre.

Such a choice perfectly combines the need of providing the blocks with strength and, at the same time, with mobility in the circumferential direction while entering or leaving the footprint area.

In some embodiments, the second transverse grooves may extend according to a direction adapted to form an angle α4 with the equatorial plane X-X.

Preferably, the angle α4 is greater than 50°, preferably greater than 70°, in any case less than 90°, for example equal to about 80°.

Preferably, the central blocks may have a substantially elongate shape in the circumferential direction.

In some embodiments, the lateral blocks may have a ratio between an average width 12, measured in the axial direction, and an average height H2, measured in the circumferential direction, in the range between 0,8 and 1, for example equal to about 0,9.

Suitably, the lateral blocks may have an average width 12 smaller than 20% of the total width L of the tread band. Preferably, the average width 12 is smaller than 16% of the width L. Preferably, the average width 12 is greater than 10% of the width L.

Suitably, the tread may comprise two third circumferential grooves for separating the above-mentioned central portion L1 from the shoulder portions L2; L3.

Preferably, the third circumferential grooves may have a substantially undulating course.

Suitably, the third circumferential grooves may have a width greater than 10 mm.

Preferably, the circumferential grooves adapted to separate the above-mentioned central portion L1 from the shoulder portions L2; L3 may have a depth greater than 10 mm, preferably greater than 15 mm, in any case smaller than 30 mm, for example equal to 18 mm.

Suitably, the above-mentioned circumferential grooves may have a ratio between groove width and depth in the range between 0,75 and 0,85.

The choice of providing the above-mentioned circumferential grooves with a relevant width and depth and with the above-mentioned ratio, beside providing good drainage features, allows the pressure generated on the shoulder portions L3, L2 and the pressure generated on the central portion L1 to be separated during operation. This solution translates in fact into a more uniform wear of the shoulder portions L3, L2 and into a noticeable reduction of the "heel and toe wear" in the central portion L1.

In some embodiments, the circumferential grooves adapted to separate the above-mentioned central portion L1 from the shoulder portions L2; L3 may be provided with a protection element for protecting the groove bottom, for example a sequence of elements projecting from the bottom of the grooves themselves.

Preferably, the shoulder blocks of the above-mentioned shoulder portions L2; L3 may be circumferentially separated by shoulder transverse grooves.

Suitably, the shoulder transverse grooves may have a depth smaller than 12 mm, preferably of between 3 mm and 12 mm, for example equal to 6 mm.

Suitably, the shoulder blocks of the shoulder portions L2; L3 may have a ratio between a block average width l₃, measured in the axial direction, and an average height H₃, measured in the circumferential direction, in the range between 0,9 and 1,1, preferably between 0,95 and 1,05, for example equal to 1.

Furthermore, in order to improve the resistance to the stresses to which these tyre portions are subjected, the shoulder blocks may have an average width l₃ greater than 15% of the total width L of the tread band. Preferably, the average width l₃ is greater than 16% of the width L. Preferably, the width l₃ is smaller than 25% of the width L.

Preferably, the transverse grooves, respectively in the shoulder, second and first rows, may have an average depth that increases moving axially from the shoulder portions L2; L3 to the equatorial plane X-X.

The choice of providing the above-mentioned transverse grooves with an average width that increases moving in the direction of the equatorial plane X-X allows excellent traction features to be maintained during the whole service life of the tyre, at the same time adapting the required features based on the seasonal climatic changes.

In fact, these tyres are usually mounted on heavy load vehicles during the autumn or winter season, which is characterised by abundant rain and snow precipitation.

During this period, such tyres shall be able to work under wet or snow-covered ground conditions: it is thus required the presence of grooves of average depth not only on the central portion, but on the whole tread band.

When the good season arrives and weather conditions change, this kind of tyres is required to have good traction features in the central portion and good strength features in the shoulder portions.

The depth graduality of the circumferential grooves and the wear due to the normal life cycle thus allow adapting the tyre to the above-mentioned needs.

Preferably, respectively the first, second and third circumferential grooves may have an average width that decreases moving axially from the shoulder portions L2; L3 to the equatorial plane X-X.

The average width of the circumferential grooves varies moving axially from the shoulder portions L2; L3 to the equatorial plane X-X depending on the tasks the circumferential grooves shall carry out.

The third circumferential grooves have a relevant width for carrying out a drainage function and for separating possibly synergistic effects between pressures generated on the shoulder portions L2; L3 and on the central portion L1.

The choice of providing the second circumferential grooves with an intermediate width, in any case smaller than the width of the third circumferential grooves, allows such grooves to carry out a drainage function avoiding, at the same time, the possible trapping of stones. The choice of a too small width for these circumferential grooves would cause, on the contrary, a general stiffening of the central portion of the tread, to the detriment of the running comfort and with a risk of triggering undesired wear phenomena.

Finally, the choice of a smaller width for the first circumferential groove contributes to allowing the central blocks to cooperate in the footprint area.

For achieving a more balanced pressure distribution, with a higher distribution in those tyre portions in which greater stresses arise in operation, the shoulder blocks have an average width 13 greater than the average width 11 of the central blocks.

Advantageously, the blocks have a ratio between an average width 1, measured in the axial direction, and the width L of the tread band which decreases moving axially form the shoulder portions L2; L3 to the equatorial plane.

In order to improve the adherence to the ground in case of wet grounds, the rows of central and/or lateral and/or shoulder blocks may have a plurality of sipes.

The sipes may have a depth of between 1 and 10 mm, and a width smaller than 2 mm.

The tyre of the invention has an excellent running behaviour on dry and wet road grounds, as well as a good traction during its whole life.

The excellent traction and directionality features of the tyre according to the present invention make such tyre particularly suitable to be mounted on both steering wheels and traction wheels.

Furthermore, the tyre of the invention also has low noise and uniform wear features. The low noise characterising the tyre of the invention make the same suitable also to be mounted on rear wheels of busses, without a risk of transmitting undesired noise into the cabin and to passengers because of the amplifying effect generated by the bodywork portion which covers the rear tyres in busses.

Further features and advantages of the present invention shall now be presented with reference to some embodiments thereof shown hereafter for indicating and non limiting purposes in the accompanying drawings, wherein:
- Fig. 1 is a perspective view of a tyre having a tread made according to an example of the invention;
- Fig. 2 is a plan view of the tread of the tyre of Fig. 1;
- Fig. 3 is an enlarged cross-sectional view of the tread of the tyre of Fig. 2;
- Fig. 4 is a cross-sectional view of the tyre of Fig. 1.

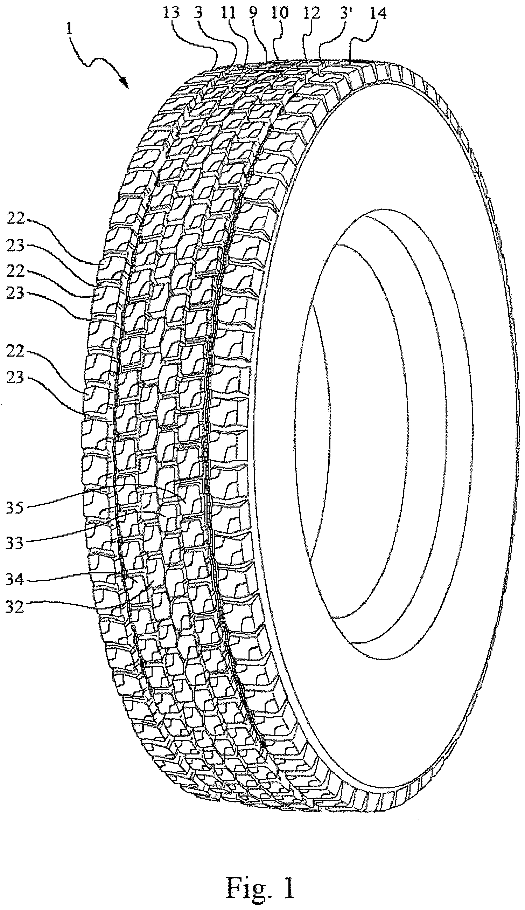

In figure 1 a tyre for vehicle wheels according to the present invention, in particular a tyre intended for both steering and traction wheels of a heavy load vehicle, is globally indicated at 1.

In the following description and in the appended claims, by the expression: "heavy load vehicle" it is meant a vehicle belonging to classes M2-M3, N2-N3 and O2∼O4 defined in "Consolidated Resolution of the Construction of Vehicles (R.E.3) (1997)", Annex 7, pages 52-59, "Classification and definition of power-driven vehicles and trailers", such as for example trucks, lorries, tractors, busses, vans and other vehicle of this kind.

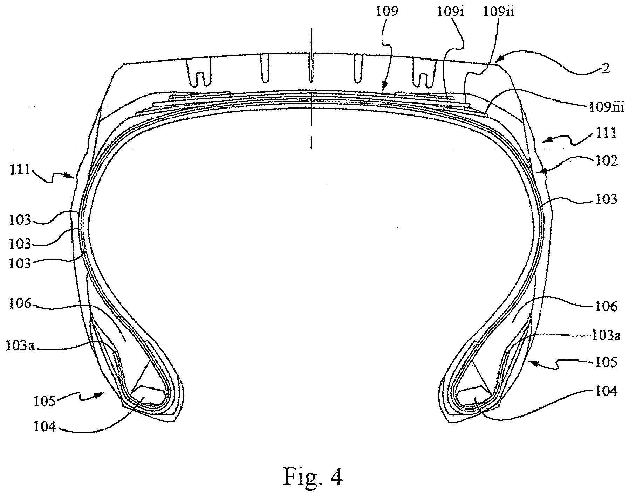

As better shown in figure 4, the tyre 1 comprises a carcass structure 102, including at least one, preferably two, carcass ply(plies) 103 formed by reinforcing cords, typically made of metal, incorporated into an elastomeric matrix.

The carcass ply 103 has opposite end edges 103a engaged with respective bead rings 104. The latter are arranged in regions 105 of the tyre 1 usually called "beads".

An elastomeric filling 106 taking up the space defined between the carcass ply 103 and the respective end edge 103a of the carcass ply 103 is applied onto the radially outer perimeter edge of the bead rings 104. The bead rings 104 hold the tyre 1 firmly fixed to an anchoring seat provided for this purpose in the wheel rim, thus preventing the bead 105 from coming out from such a seat during operation.

At the beads 105 specific reinforcing structures (not shown) may be provided, which have the function of improving the torque transmission to the tyre.

In a radially outer position with respect to the carcass ply 102 a belt structure 109 is provided, which preferably comprises several belt layers (three layers 109i, 109ii, 109iii are show in this specific example) arranged radially one on top of the other and having reinforcing cords, typically made of metal, with a crossed orientation and/or substantially parallel with respect to the direction of circumferential development of the tyre 1.

A tread band 2, made as well of an elastomeric material, is applied in a radially outer position with respect to the belt structure 109.

On the lateral surfaces of the carcass structure 102 respective sidewalls 111 made of an elastomeric material are further applied, each extending from one of the opposite lateral edges 100a of the tread band 2 up to the respective annular structure 104 for the anchoring to the beads 105.

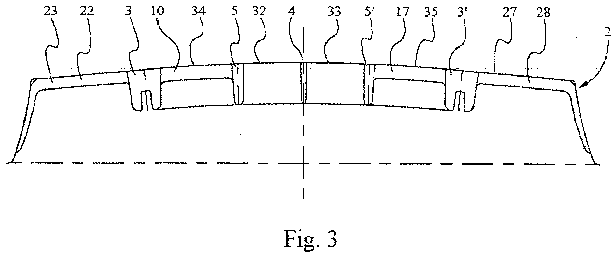

Referring to figures 1-3, the tread band 2 comprises a central portion L1 and two shoulder portions L2; L3.

The central portion L1, arranged astride the equatorial plane X-X, is visually separated from the shoulder portions L2; L3 by two third circumferential grooves 3, 3'.

The third circumferential grooves 3, 3' are provided mainly for ensuring the water drainage in the footprint area, particularly when the tyre is running on a straight path.

For this purpose, the third circumferential grooves 3, 3' may have a width greater than 10 mm. Preferably, the third circumferential grooves 3, 3' may have a width larger than 13 mm, in any case smaller than 20 mm, for example equal to 15 mm.

Advantageously, the circumferential grooves 3, 3' may have a depth greater than 10 mm, preferably greater than 15 mm, in any case smaller than 30 mm, for example equal to 18 mm.

Preferably, the circumferential grooves 3, 3' have a ratio between groove width and depth in the range between 0,75 and 0,85.

The choice of providing the third circumferential grooves 3, 3' with a relevant width and depth and with the above-mentioned ratio, beside providing good drainage features, allows the pressure generated on the shoulder portions L3, L2 and the pressure generated on the central portion L1 to be separated during operation. This solution translates in fact into a more uniform wear of the shoulder portions L3, L2 and into a noticeable reduction of the "heel and toe wear" in the central portion L1.

More preferably, the third circumferential grooves 3, 3' have an undulating course, as better explained hereinafter. The undulating course of the grooves 3, 3' increases the lateral stiffness of the tyre, providing a better handling.

Still referring to the preferred embodiment shown in figures 1-3, the third circumferential grooves 3, 3' may be provided with a protection element for protecting the groove bottom, usually known as "stone ejector". In the embodiment shown in the figures the stone ejector is formed as a sequence of elements 7 projecting from the bottom of the groove. Such projecting elements 7 are shaped and spaced apart from one another so as to protect the groove bottom and avoid the trapping of gravel or small stones which may cause tearing or uneven wear.

In detail, the stone ejector of the third circumferential grooves 3, 3' may be formed by a plurality of projecting elements 7, preferably all having the same shape and dimension. Preferably, in the embodiment shown in figures 1-3, the projecting elements 7 may have a height which is linked to the depth of the third circumferential groove 3, 3'. In detail, the projecting elements 7 have a height of between 35% and 60% of the groove depth, for example equal to about 45% of the groove depth.

Furthermore, the projecting elements 7 may be arranged according to an undulating course.

Preferably, the projecting elements 7 may be arranged at a distance from one another of between 0,5 and 1,5 of their maximum dimension in the circumferential direction, for example at a distance from one another equal to 1.

Still referring to the embodiment of figures 1-3, the central portion L1 has a first and second central rows 9, 10 of central blocks, which comprise a plurality of central blocks 32, 33, and at least one first and one second lateral rows 11, 12 of lateral blocks, which comprise a plurality of lateral blocks 34, 35; each of the shoulder portions L2; L3 has instead a row, respectively 13, 14, of shoulder blocks which comprises a respective plurality of shoulder blocks 22, 27.

With reference to the embodiment of figures 1-3, the shoulder portions L2, L3 shall be described first, and only afterwards a detailed description of the central portion L1 shall be presented.

In detail, the shoulder portion L2 has a row 13 of shoulder blocks, comprising a plurality of shoulder blocks 22 separated from one another by shoulder transverse grooves 23.

The shoulder transverse grooves 23 substantially have a constant width, and more preferably have a width of between 14 mm and 28 mm, for example equal to 22 mm.

The shoulder transverse grooves 23 are substantially formed by two segments, of which a first segment 23a, namely the axially outer one, has a lesser extension than the second segment 23b.

Furthermore, the first segment 23a extends along a direction inclined with respect to the equatorial plane X-X and adapted to form and angle α5 with the equatorial plane X-X, whereas the second segment extends along a direction inclined with respect to the previous one so as to form an angle α6 with the equatorial plane X-X. Preferably, the first segment 23a of the shoulder transverse grooves 23 forms an angle α5 with the equatorial plane X-X that is less than 90°, preferably greater than 10°, whereas the second segment of the shoulder grooves 23 forms an angle α6 greater than 90° and preferably less than 120°.

The dual inclination of the first 23a and second 23b segments of the shoulder transverse grooves 23 allow longer ground-contacting edges to be obtained, with an advantage for the traction of the tyre, particularly on a wet ground.

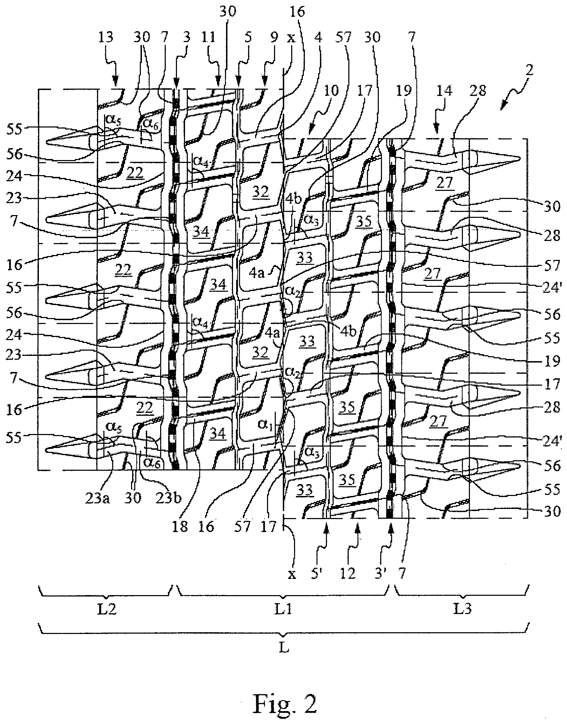

The inclinations of the first 23a and second 23b segments of the shoulder transverse grooves determine, with reference to figure 2, the formation of an upper vertex 56 and a lower vertex 55 in each shoulder block 22. Preferably, for each shoulder block 22, the upper vertex 56 is oriented substantially in the same direction as the lower vertex 55.

The shoulder blocks 22 of the row 13 of shoulder blocks have all of the upper 56 and lower 55 vertexes pointing in the same direction.

Furthermore, the shoulder transverse grooves 23 preferably have a depth smaller than 12 mm, preferably of between 3 mm and 12 mm, for example equal to 6 mm.

The choice of having a reduced depth for the transverse grooves 23 allows the shoulder blocks 22 to be "tied", thus ensuring a greater strength with respect to lateral and torsional stresses and a significant reduction of the vibrations caused by the tyre while rolling (with an advantage as to the running comfort).

According to the embodiment shown in figures 1-3, the shoulder blocks 22 substantially have a compact shape. In other words, the ratio between a block average width l₃, measured in the axial direction, and an average height H₃, measured in the circumferential direction, may be comprised in the range between 0,9 and 1,1, preferably between 0,95 and 1,05, for example equal to 1.

Furthermore, in order to improve the resistance to the stresses these tyre portions are subjected to, the shoulder blocks 22 have an average width l₃ greater the 15% of the total width L of the tread band. Preferably, the average width l₃ is greater than 16% of the width L. Preferably, the average width l₃ is smaller than 25% of the width L.

As far as the row 14 of shoulder blocks 27 of the shoulder portion L3 is concerned, it is noted that, apart from the orientation of the vertexes 55, 56, the row 14 of shoulder blocks 27 is totally similar to the row 13 of shoulder blocks 22 and is obtained simply by rotating the latter by 180°.

Furthermore, the shoulder blocks 27 of row 14 are substantially arranged in a circumferential position corresponding to that of the shoulder blocks 22 of row 13, leaving out small circumferential offsets at most of the order of 3-5% of the total circumferential development of the tyre. The shoulder blocks 27 of row 14 as well are separated by shoulder transverse grooves 28 totally similar to the transverse grooves 23 of row 13.

As mentioned above, it can be noted that the vertexes 55, 56 of the shoulder blocks 22, 27 belonging to the same row have the same circumferential orientation, whereas according to what is shown in the embodiments of figures 1-3 the vertexes 55, 56 of two distinct rows, namely rows 13 and 14, have an opposite circumferential orientation.

The shoulder blocks 22, as well as the shoulder blocks 27, have at least partially a perimeter defined by a broken line, adapted to define a plurality of sides.

In particular, two sides, namely sides 24 and 24', of the ends of the shoulder blocks 22, 27 face and delimit the grooves 3, 3'. In other words, the sequence in the circumferential direction of the axially inner ends of blocks 22, 27, and particularly sides 24 and 24', defines the axially outer lateral wall of the third circumferential groove 3, respectively 3'.

As mentioned above, the third circumferential groove 3 preferably has an undulating course, i.e. its lateral walls have a substantially undulating course interrupted by the shoulder transverse grooves 23.

For this purpose, side 24 of the shoulder blocks 22, which face and delimit the third circumferential groove 3, as in the case shown in the figures, may be formed by a sequence of segments arranged according to an undulating course.

Similarly, as far as the third circumferential groove 3' is concerned, it can be noted that the undulating course thereof is interrupted by the shoulder transverse grooves 28 and that side 24' of the shoulder blocks 27 may be formed by a sequence of segments arranged according to an undulating course.

In order to increase traction on snow-covered roads and drainage on wet roads, the shoulder blocks 22, 27, as in the case shown in figures 1-3, may be provided with sipes 30.

The sipes 30 may have a depth of between 1 and 10 mm, for example equal to 3 mm, and a width of between 0 and 2 mm.

As mentioned above, the third circumferential grooves 3, 3' separate the central portion L1 from the shoulder portions L2, respectively L3.

The central portion L1 is designed so as to maintain high traction during the whole service life of the tyre. For this purpose, as better explained hereinafter, the central portion L1 has many rows of blocks and blocks which are lesser "tied" in the circumferential direction as compared to the rows of shoulder blocks.

In detail, in the embodiment shown in figures 1-3, the central portion L1 has four rows 9, 10, 11, 12 of circumferential blocks, two rows of central blocks 32, 33 and two rows of lateral blocks 34, 35.

The rows 11, 12 of lateral blocks are outwardly arranged with respect to the rows 9, 10 of central blocks so that each of the rows 11, respectively 12 of lateral blocks is separated from a row 9, respectively 10, of central blocks by a circumferential groove 5, 5'.

In the embodiment of figures 1, 2 the first lateral row 11 of lateral blocks 34 is interposed between the third circumferential groove 3 and the second circumferential groove 5, whereas the second lateral row 12 of lateral blocks 35 is interposed between the second circumferential groove 5' and the third circumferential groove 3'.

The rows 9, 10 of central circumferential blocks 32, 33 are separated from each other in the axial direction by a first circumferential groove 4 having a substantially "zig-zagging" course, as better described hereinafter.

In the embodiment of figures 1-3, the row 9 of central blocks 32 is thus interposed between the first circumferential groove 4 and the second circumferential groove 5.

Similarly, the row 10 of central block 33 is interposed between the circumferential groove 4 and the circumferential groove 5'.

Furthermore, the central blocks 32 of the first central row 9 are separated from one another in the circumferential direction by first central transverse grooves 16, and the central blocks 33 of the second central row 10 are separated from one another in the circumferential direction by first central transverse grooves 17.

Preferably, in some embodiments such as that shown in figures 1-3, the first central transverse grooves 16 are not circumferentially aligned with the first central transverse grooves 17, being instead circumferentially staggered with respect to the same.

Preferably, the first central transverse grooves 16 are staggered with respect to the first central transverse grooves 17 by about 1/3 of the pitch.

The first central transverse grooves 16, as well as the first central transverse grooves 17, extend along a direction adapted to form an angle α3 with the equatorial plane X-X.

Preferably, the angle α3 is greater than 50°, preferably greater than 70°, in any case less than 90°, for example equal to about 80°.

As mentioned above, the first circumferential groove 4 has a "zig-zagging" course defined by a plurality of segments inclined with respect to the equatorial plane X-X.

In detail, the first circumferential groove 4 is formed by a sequence of first inclined segments 4a and by a sequence of second segments 4b counter-inclined with respect to the previous ones.

Preferably, a first substantially inclined segment 4a is alternated with a second counter-inclined segment 4b.

Suitably, as shown in the embodiments of figures 1-3, the first inclined segments 4a of the first circumferential groove 4 are inclined so as to form an angle α1 with the equatorial plane X-X, with α1 less than 90°, preferably less than 45°. Preferably, α1 is greater than 5°. For example, it may be equal to about 15°.

Similarly, the second segments of the circumferential groove 4 are arranged so as to form an angle α2 with the equatorial plane X-X, with α2 greater than 90°, preferably greater than 130°. Preferably, α2 is less than 175°. For example α2 may be equal to about 165°.

In the embodiment shown in figures 1 and 2 it can be noted that the "zig-zagging" course of the first circumferential groove 4 is interrupted by the central transverse grooves 16, respectively 17.

The opposite inclination of the first 4a and second 4b segments of the circumferential groove 4 creates a lateral vertex 57 in each central block 32, 33.

According to some embodiments not shown, the lateral vertex 57 could be rounded without departing from the scope of protection of the present invention.

In detail, the opposite inclination of the first 4a and second 4b segments of the circumferential groove 4 creates a lateral vertex 57 formed by the convergence of two axially inner sides, facing the groove 4, of the central block.

Preferably, the vertexes 57 of the central blocks 32 of the first central row 9 are oriented substantially in a same direction, and the vertexes 57 of the central blocks 33 of the second central row 10 are all oriented in a same direction.

Preferably, the vertexes 57 of the central blocks 33 of the second central circumferential row 10 have an opposite orientation with respect to the vertexes 57 of the central blocks 32 of the first central circumferential row 9.

According to a relevant aspect of the present invention, the first inclined segments 4a and the second counter-inclined segments 4b define on each block 32, 33 of the first central circumferential row 9 and of the second central circumferential row 10 a first inclined side and a second counter-inclined side adapted to form a convex portion.

Each block 32 of the first central row 9 is arranged with respect to the blocks 33 of the second central row 10 so that the inclined and counter-inclined sides thereof respectively face an inclined or counter-inclined side of two distinct blocks 33 of the second central row 10.

Preferably, each block 32 of the first central row 9 is arranged with respect to the blocks 33 of the second central rows 10 so that the inclined and counter-inclined sides thereof respectively face an inclined or counter-inclined side of two circumferentially adjacent blocks 33 of the second central row 10.

The first circumferential row 4 has a width smaller than 3 mm.

Preferably, the first circumferential groove 4 has a width greater than 0,2 mm. For example, the width may be equal to 2 mm.

Advantageously, the first circumferential groove 4 has a depth greater than 10 mm, preferably of between 12 mm and 22 mm, for example equal to 18 mm.

The Applicant has found that the highly swerved course and the extremely reduced width of the first circumferential groove 4, together with the reciprocal arrangement of the central blocks 32, 33, cause axially adjacent central blocks in the footprint area to pack with one another, so that they lean one against the other, thus reducing the lateral movements. A better wear resistance and a better driving precision result from the above-mentioned packing.

The Applicant has indeed found that the depth of the first circumferential groove 4 and of the first transverse grooves 16, 17 allows the central blocks 32, 33 to bend while entering or leaving the footprint area, which is advantageous for the tyre traction.

Advantageously, for providing a greater strength, the central blocks 32 of row 9, as well as the central blocks 33 of row 10, may substantially have the shape of polygons, preferably of convex polygons.

Furthermore, still for imparting strength to the blocks, the central blocks 32, 33 have a ratio between an average width 11, measured in the axial direction, and an average height H1, measured in the circumferential direction, in the range between 0,6 and 0,8, for example equal to about 0,7.

Furthermore, the central blocks 32, 33 have an average width 11 smaller than 15%, preferably smaller than 14%, of the total width L of the tread band. Preferably, the average width 11 is greater than 7% of the width L.

The Applicant has in fact found that the dimensions of the central blocks together with their flexibility in the circumferential direction allows noticeable improvements in contrasting the noise of the pattern to be obtained, particularly as far as the noise originated while entering and leaving the footprint area is concerned, without reducing the traction capacity.

The central blocks 33 of row 10 are totally similar, as to their shape and dimensions, to the blocks 32 of row 9, and are obtained by rotating such row by 180°.

The central blocks 32 of the first central row 9 are circumferentially staggered with respect to the central blocks 33 of the second central row 10.

In the embodiment of figures 1-3, the first lateral row 11 of lateral blocks is interposed between the third circumferential groove 3 and the second circumferential groove 5, while the second lateral row 12 of lateral blocks 35 is interposed between the second circumferential groove 5' and the third circumferential groove 3'.

The lateral blocks 34, as well as the lateral blocks 35, are separated from one another by transverse grooves 18, 19.

The second transverse grooves 18, as well as the second transverse grooves 19, extend according to an inclined direction with respect to the equatorial plane X-X, in other words the second transverse grooves 18, as well as the second transverse grooves 19, extend according to a direction adapted to form an angle α4 with the equatorial plane X-X.

Preferably, the angle α4 is greater than 50°, preferably greater than 70°, in any case less than 90°, for example equal to about 80°.

The second transverse grooves 18 do not have a circumferential position corresponding to that of the second transverse grooves 19, being instead staggered with respect to the same.

The second transverse grooves 18 have a maximum depth greater than 12 mm, preferably smaller than 25 mm, for example equal to 18 mm.

Keeping the depth the same, the transverse grooves 18 have substantially a constant width along their extension.

In detail, the transverse grooves 18 are substantially formed by two portions having a different width moving radially inwardly, i.e. towards the rotation axis of the tyre.

In detail, in a first portion preferably the grooves 18 have width not greater than about 12 mm, for example equal to about 10 mm. The above-mentioned first portion is defined at a depth of between 0 and 6 mm starting from the radially outer surface of the tread band.

In a second portion, having a depth of between about 6 and about 18 mm, the grooves 18 have a width not greater than about 3 mm, for example equal to about 2 mm.

Suitably, the above-mentioned second transverse grooves 18, 19 may have a ratio between the groove width and the depth of the first portion, i.e. the radially outermost one, in the range between 1,5 and 2.

According to the embodiment shown in the figures, the lateral blocks 34 of the second lateral circumferential row 11 have substantially the same shape and dimensions of the lateral blocks 35 of the second lateral circumferential row 12.

In detail, the lateral blocks 34 of the second lateral circumferential row 11, as well as the lateral blocks 35 of the second lateral circumferential row 12 may substantially have an elongate shape in the circumferential direction.

The lateral blocks 34, 35 have a ratio between an average width 12, measured in the axial direction, and an average height H2, measured in the circumferential direction, in the range between 0,8 and 1, for example equal to about 0,9.

Furthermore, the lateral blocks 34, 35 have an average width 12 smaller than 20%, preferably smaller than 16%, of the total width L of the tread band. Preferably, the average width 12 is greater than 10% of the width L.

The lateral blocks 34, as well as the lateral blocks 35, have substantially the shape of a quadrilateral with opposite side parallel to each other.

In the embodiment shown in the figures, two opposite sides of a lateral block 32 face two opposite second transverse grooves 18 and the remaining two opposite sides face respectively the circumferential grooves 3 and 5.

Similarly, still referring to the embodiment shown in the figures, it can be noted that two opposite sides of the lateral blocks 35 face two opposite transverse grooves 19 and the remaining two opposite sides respectively face the circumferential grooves 3', 5'.

As mentioned above, preferably the third circumferential groove 3, respectively 3', has a substantially undulating course. This means that the lateral wall of the third circumferential groove 3, respectively 3' have a substantially undulating course. The substantially undulating course of the third circumferential groove 3, respectively 3', is further interrupted by the second lateral transverse grooves 18, respectively 19.

For this purpose, the side of the lateral block 34, respectively 35, facing and delimiting the third circumferential groove 3, respectively 3', as in the case shown in the figures, may be formed by a sequence of segments arranged according to an undulating course.

In detail, the side of the lateral block 34, respectively 35, facing and delimiting the third circumferential groove 3, respectively 3', may be formed by three segments, namely two segments parallel to each other but axially staggered, and one intermediate segment connecting the said two segments.

The choice of providing at least one side of the lateral block 34, respectively 35, with an undulating course allows the grip surface to be increased, thus favouring traction.

In can be noted that according to the present invention the central blocks 32; 33 and the lateral blocks 34, 35 may be provided with sipes 30.

The sipes 30 may have a depth of between 1 and 10 mm, for example equal to 3 mm, and a width in the range between 0,2 and 2 mm.

Preferably, the sipes 30 have at least two extension directions.

Preferably, the tread has respectively shoulder, second and first transverse grooves with a depth that increases moving axially from the shoulder portions L2; L3 to the equatorial plane X-X.

The Applicant believes in fact that such a choice favours the tyre traction without negatively affecting the noise level and the service life.

Furthermore, such a choice allows the tyre features to be adapted based on the seasonal climatic changes.

As previously mentioned, this kind of tyres are in fact usually mounted on heavy load vehicles during the autumn or winter season. During this period, such tyres shall be able to work under wet or snow-covered ground conditions: it is thus required the presence of grooves of average depth not only on the central portion, but on the whole tread band.

When the good season arrives and environmental conditions change, good traction features in the central portion and good strength features in the shoulder portions are required.

The depth graduality and the wear, due to the normal life cycle, thus allow adapting the tyre to the above-mentioned needs.

Preferably, respectively the first, second and third circumferential grooves may have an average width that decreases moving axially from the shoulder portions L2; L3 to the equatorial plane X-X.

The average width of the circumferential grooves varies moving axially from the shoulder portions L2; L3 to the equatorial plane X-X depending on the tasks the circumferential grooves shall carry out.

The third circumferential grooves have a relevant width for carrying out a drainage function and for separating possibly synergistic effects between pressures generated on the shoulder portions L2; L3 and on the central portion L1.

The choice of providing the second circumferential grooves with an intermediate width, in any case smaller than the width of the third circumferential grooves, allows such grooves to carry out a drainage function avoiding, at the same time, the possible trapping of stones. The choice of a too small width for these circumferential grooves would cause, on the contrary, a general stiffening of the central portion of the tread, to the detriment of the running comfort and with a risk of triggering undesired wear.

Finally, the choice of a smaller width for the first circumferential groove contributes to allowing the central blocks 32, 33 to cooperate in the footprint area.

Furthermore, the tread blocks preferably have a ratio between an average width 1, measured in the axial direction, and the width L of the tread band which decreases moving axially form the shoulder portions L2; L3 to the equatorial plane (X-X).

The present invention has been described with reference to some embodiments thereof. Many modifications can be made in the embodiments described in detail, still remaining within the scope of protection of the invention, defined by the following claims.

## Claims

1. Tyre (1) having a tread (2) comprising a central portion (L1) astride an equatorial plane (X-X) and two shoulder portions (L2,L3), wherein:
the shoulder portions (L2;L3) each have at least one row of shoulder blocks (13;14) comprising a plurality of shoulder blocks (22;27);
the central portion (L1) has at least one first (9) and one second (10) central rows of central blocks comprising a plurality of central blocks (32;33) and at least one first (11) and one second (12) lateral rows of lateral blocks comprising a plurality of lateral blocks (34;35);
the central blocks (32;33) of the first and second central rows (9;10) have an average width 11 smaller than 15% of the total width L of the tread; the central blocks (32;33) of the first and second central rows (9;10) are longitudinally separated respectively by first transverse grooves (16;17);
the central blocks (32) of the first central row (9) are axially separated from the central blocks (33) of the second central row (10) by a first circumferential groove (4) with a "zig-zagging" course comprising a plurality of first inclined segments (4a) alternated with a plurality of second segments (4b) counter-inclined with respect to said first inclined segments (4a);
said first circumferential groove (4) has a width smaller than 3 mm and a depth greater than 10 mm;
said first inclined segments (4a) and said second counter-inclined segments (4b) define on each central block of the first and second central rows a first inclined side and a second side counter-inclined with respect to said first side, said first side and said second side being adapted to form a convex portion of said central block;
each central block (32) of the first central row (9) is arranged with respect to the central blocks (33) of the second central row (10) so that a first side thereof faces a second side of a first central block of the second central row, and that a second side thereof faces a first side of a second central block of the second central row, distinct from said first block of the second central row;
said tyre being **characterized in that** the lateral blocks (34;35) are circumferentially separated by second transverse grooves (18; 19) having a width that varies as a function of the depth.

2. Tyre according to claim 1, **characterized in that** each central block (32) of the first central row (9) is arranged with respect to the central blocks (33) of the second central row (10) so that a first side thereof faces a second side of a first central block of the second central row, and that a second side thereof faces a first side of a second central block of the second central row, circumferentially adjacent to the first block of the second central row.

3. Tyre according to claim 1, **characterized in that** the central blocks (32;33) of the first and second central rows (9;10) have a ratio between a block average width 11, measured in the axial direction, and a block average height H1, measured in the circumferential direction, in the range between 0,6 and 0,8.

4. Tyre according to claim 1, **characterized in that** the central blocks (32;33) of the first and second central rows (9;10) have the shape of substantially convex polygons.

5. Tyre according to anyone of the previous claims, **characterized in that** the shoulder blocks of the said shoulder portions (L2;L3) are circumferentially separated by shoulder transverse grooves (23;28).

6. Tyre according to claim 5, **characterized in that** the shoulder transverse grooves (23;28) have a depth smaller than 12 mm.

7. Tyre according to anyone of the previous claims, **characterized in that** the shoulder blocks of the shoulder portions (L2;L3) have a ratio between an average width 13, measured in the axial direction, and an average height H3, measured in the circumferential direction, in the range between 0,9 and 1,1.

8. Tyre according to anyone of the previous claims, **characterized in that** the shoulder blocks (23;28) have an average width 13, measured in the axial direction, greater than 15% of the width of the tread band L.

9. Tyre according to anyone of the previous claims, **characterized in that** respectively the shoulder, second and first transverse grooves have an average depth that increases moving axially from the shoulder portions (L2;L3) to the equatorial plane (X-X).

10. Tyre according to anyone of the previous claims, **characterized in that** respectively the first, second and third circumferential grooves have an average width that decreases moving axially from the shoulder portions (L2;L3) to the equatorial plane (X-X).

## Patentansprüche

1. Reifen (1) mit einer Lauffläche (2) umfassend einen zentralen Abschnitt (L1) zu beiden Seiten einer Äquatorialebene (X-X) sowie zwei Schulterabschnitte (L2, L3), wobei:
die Schulterabschnitte (L2; L3) jeweils zumindest eine Reihe von seitlichen Blöcken (13; 14) aufweisen, die eine Vielzahl von Schulterblöcken (22; 27) umfassen;
wobei der zentrale Abschnitt (L1) zumindest eine erste (9) und eine zweite (10) zentrale Reihe von zentralen Blöcken aufweist, die eine Vielzahl von zentralen Blöcken (32; 33) umfassen, sowie zumindest eine erste (11) und eine zweite (12) seitliche Reihe von seitlichen Blöcken, die eine Vielzahl von seitlichen Blöcken (34; 35) umfassen;
wobei die zentralen Blöcke (32; 33) der ersten und zweiten zentralen Reihen (9; 10) eine durchschnittliche Breite von weniger als 15% der Gesamtbreite L der Lauffläche aufweisen; wobei die zentralen Blöcke (32; 33) der ersten und zweiten zentralen Reihen (9; 10) der Länge nach jeweils durch erste querverlaufende Nuten (16; 17) getrennt werden;
wobei die zentralen Blöcke (32) der ersten zentralen Reihe (9) axial von den zentralen Blöcken (33) der zweiten zentralen Reihe (10) durch eine erste umlaufende Nut (4) mit einem "Zickzack-Verlauf" getrennt sind, die eine Vielzahl von ersten schrägen Segmenten (4a) umfassen, die sich mit einer Vielzahl von zweiten Segmenten (4b) abwechseln, die in Bezug auf die ersten schrägen Segmenten (4a) entgegengesetzt schräg sind;
wobei die erste umlaufende Nut (4) eine Breite von weniger als 3 mm und eine Tiefe größer als 10 mm aufweist;
wobei die ersten schrägen Segmente (4a) und die zweiten entgegengesetzt schrägen Segmente (4b) an jedem zentralen Block der ersten und zweiten zentralen Reihen eine erste schräge Seite und eine zweite, in Bezug auf die erste Seite entgegengesetzt schräge Seite definieren, wobei die erste Seite und die zweite Seite dazu geeignet sind, einen konvexen Abschnitt des zentralen Blocks zu bilden;
wobei jeder zentrale Block (32) der ersten zentralen Reihe (9) in Bezug auf die zentralen Blöcke (33) der zweiten zentralen Reihe (10) so angeordnet ist, dass die erste Seite desselben zu einer zweiten Seite eines ersten zentralen Blocks der zweiten zentralen Reihe weist, und dass eine zweite Seite desselben zu einer ersten Seite eines zweiten zentralen Blocks der zweiten zentralen Reihe weist, der sich von dem ersten Block der zweiten zentralen Reihe unterscheidet;
wobei der Reifen **dadurch gekennzeichnet ist, dass** die seitlichen Blöcke (34; 35) in Umfangsrichtung durch zweite querverlaufende Nuten (18; 19) getrennt werden, die eine Breite aufweisen, die abhängig von der Tiefe variiert.

2. Reifen nach Anspruch 1, **dadurch gekennzeichnet, dass** jeder zentrale Block (32) der ersten zentralen Reihe (9) in Bezug auf die zentralen Blöcke (33) der zweiten zentralen Reihe (10) so angeordnet ist, dass eine erste Seite desselben zu einer zweiten Seite eines ersten zentralen Blocks der zweiten zentralen Reihe weist, und eine zweite Seite desselben zu einer ersten Seite eines zweiten zentralen Blocks der zweiten zentralen Reihe weist, der in Umfangsrichtung zu dem ersten Block der zweiten zentralen Reihe benachbart ist.

3. Reifen nach Anspruch 1, **dadurch gekennzeichnet, dass** die zentralen Blöcke (32; 33) der ersten und zweiten zentralen Reihen (9; 10) ein Verhältnis zwischen einer durchschnittlichen Blockbreite 11, gemessen in der axialen Richtung, und einer durchschnittlichen Blockhöhe H1, gemessen in der Umfangsrichtung, im Bereich zwischen 0,6 und 0,8 aufweist.

4. Reifen nach Anspruch 1, **dadurch gekennzeichnet, dass** die zentralen Blöcke (32; 33) der ersten und zweiten zentralen Reihen (9; 10) die Form von im Wesentlichen konvexen Vielecken aufweist.

5. Reifen nach einem der vorhergehenden Ansprüche, **dadurch gekennzeichnet, dass** die Schulterblöcke der Schulterabschnitte (L2; L3) in Umfangsrichtung durch Schulterquernuten (23; 28) getrennt werden.

6. Reifen nach Anspruch 5, **dadurch gekennzeichnet, dass** die Schulterquernuten (23; 28) eine Tiefe von weniger als 12 mm aufweisen.

7. Reifen nach einem der vorhergehenden Ansprüche, **dadurch gekennzeichnet, dass** die Schulterblöcke der Schulterabschnitte (L2; L3) ein Verhältnis zwischen einer durchschnittlichen Blockbreite 13, gemessen in der axialen Richtung, und einer durchschnittlichen Blockhöhe H3, gemessen in der Umfangsrichtung, im Bereich zwischen 0,9 und 1,1 aufweisen.

8. Reifen nach einem der vorhergehenden Ansprüche, **dadurch gekennzeichnet, dass** die Schulterblöcke (23; 28) eine durchschnittliche Blockbreite 13, gemessen in der axialen Richtung, größer als 15% der Breite des Laufflächenrings L aufweisen.

9. Reifen nach einem der vorhergehenden Ansprüche, **dadurch gekennzeichnet, dass** die zweiten und ersten Schulterquernuten jeweils eine durchschnittliche Tiefe aufweisen, die axial von den Schulterabschnitten (L2; L3) zu der Äquatorialebene (X-X) verlaufend zunimmt.

10. Reifen nach einem der vorhergehenden Ansprüche, **dadurch gekennzeichnet, dass** die ersten, zweiten und dritten umlaufenden Nuten jeweils eine durchschnittliche Breite aufweisen, die axial von den Schulterabschnitten (L2; L3) zu der Äquatorialebene (X-X) verlaufend abnimmt.

## Revendications

1. Pneu (1) ayant une bande de roulement (2) comprenant une partie centrale (L1) à califourchon sur un plan équatorial (X-X) et deux parties d'épaulement (L2, L3), dans lequel :
les parties d'épaulement (L2 ; L3) ont chacune au moins une rangée de pavés d'épaulement (13 ; 14) comprenant une pluralité de pavés d'épaulement (22 ; 27) ;
la partie centrale (L1) a au moins des première (9) et deuxième (10) rangées centrales de pavés centraux comprenant une pluralité de pavés centraux (32 ; 33) et au moins des première (11) et deuxième (12) rangées latérales de pavés latéraux comprenant une pluralité de pavés latéraux (34 ; 35) ;
les pavés centraux (32 ; 33) des première et deuxième rangées centrales (9 ; 10) ont une largeur moyenne 11 inférieure à 15% de la largeur totale L de la bande de roulement ; les pavés centraux (32 ; 33) des première et deuxième rangées centrales (9 ; 10) sont séparés longitudinalement respectivement par des premières rainures transversales (16 ; 17) ;
les pavés centraux (32) de la première rangée centrale (9) sont axialement séparés des pavés centraux (33) de la deuxième rangée centrale (10) par une première rainure circonférentielle (4) avec un parcours en « zigzag » comprenant une pluralité de premiers segments inclinés (4a) alternés avec une pluralité de deuxièmes segments (4b) inclinés en sens opposé par rapport auxdits premiers segments inclinés (4a) ;
ladite première rainure circonférentielle (4) a une largeur inférieure à 3 mm et une profondeur supérieure à 10 mm ;
lesdits premiers segments inclinés (4a) et lesdits deuxièmes segments inclinés en sens opposé (4b) définissent sur chaque pavé central des première et deuxième rangées centrales un premier côté incliné et un deuxième côté incliné en sens opposé par rapport audit premier côté, ledit premier côté et ledit deuxième côté étant adaptés pour former une partie convexe dudit pavé central ;
chaque pavé central (32) de la première rangée centrale (9) est agencé par rapport aux pavés centraux (33) de la deuxième rangée centrale (10) de sorte qu'un premier côté de celui-ci soit tourné vers un deuxième côté d'un premier pavé central de la deuxième rangée centrale, et qu'un deuxième côté de celui-ci soit tourné vers un premier côté d'un deuxième pavé central de la deuxième rangée centrale, distinct dudit premier pavé de la deuxième rangée centrale ;
ledit pneu étant **caractérisé en ce que** les pavés latéraux (34 ; 35) sont séparés sur la circonférence par des deuxièmes rainures transversales (18 ; 19) ayant une largeur qui varie en fonction de la profondeur.

2. Pneu selon la revendication 1, **caractérisé en ce que** chaque pavé central (32) de la première rangée centrale (9) est agencé par rapport aux pavés centraux (33) de la deuxième rangée centrale (10) de sorte qu'un premier côté de celui-ci soit tourné vers un deuxième côté d'un premier pavé central de la deuxième rangée centrale, et qu'un deuxième côté de celui-ci soit tourné vers un premier côté d'un deuxième pavé central de la deuxième rangée centrale, adjacent sur la circonférence au premier pavé de la deuxième rangée centrale.

3. Pneu selon la revendication 1, **caractérisé en ce que** les pavés centraux (32 ; 33) des première et deuxième rangées centrales (9 ; 10) ont un rapport entre une largeur moyenne de pavé 11, mesurée dans la direction axiale, et une hauteur moyenne de pavé H1, mesurée dans la direction circonférentielle, se trouvant dans la plage comprise entre 0,6 et 0,8.

4. Pneu selon la revendication 1, **caractérisé en ce que** les pavés centraux (32 ; 33) des première et deuxième rangées centrales (9 ; 10) ont la forme de polygones essentiellement convexes.

5. Pneu selon l'une quelconque des revendications précédentes, **caractérisé en ce que** les pavés d'épaulement desdites parties d'épaulement (L2 ; L3) sont séparés sur la circonférence par des rainures transversales d'épaulement (23 ; 28).

6. Pneu selon la revendication 5, **caractérisé en ce que** les rainures transversales d'épaulement (23 ; 28) ont une profondeur inférieure à 12 mm.

7. Pneu selon l'une quelconque des revendications précédentes, **caractérisé en ce que** les pavés d'épaulement des parties d'épaulement (L2 ; L3) ont un rapport entre une largeur moyenne 13, mesurée dans la direction axiale, et une hauteur moyenne H3, mesurée dans la direction circonférentielle, se trouvant dans la plage comprise entre 0,9 et 1,1.

8. Pneu selon l'une quelconque des revendications précédentes, **caractérisé en ce que** les pavés d'épaulement (23 ; 28) ont une largeur moyenne 13, mesurée dans la direction axiale, supérieure à 15% de la largeur L de la bande de roulement.

9. Pneu selon l'une quelconque des revendications précédentes, **caractérisé en ce que**, respectivement, les deuxième et première rainures transversales d'épaulement ont une profondeur moyenne qui augmente en se déplaçant axialement des parties d'épaulement (L2 ; L3) au plan équatorial (X-X).

10. Pneu selon l'une quelconque des revendications précédentes, **caractérisé en ce que**, respectivement, les première, deuxième et troisième rainures circonférentielles ont une largeur moyenne qui diminue en se déplaçant axialement des parties d'épaulement (L2 ; L3) au plan équatorial (X-X).
